# EUROPÄISCHE PATENTSCHRIFT

(11) **EP 0 809 046 B1**
(45) Veröffentlichungstag und Bekanntmachung des Hinweises auf die Patenterteilung: **30.01.2002**
(21) Anmeldenummer: 97108242.5
(22) Anmeldetag: 21.05.1997
(51) Int. Cl.: F16H 59/02

(54) **Schaltvorrichtung für ein Automatikgetriebe eines Kraftfahrzeuges**
Gear-shifting device for an automatic transmission of a motor vehicle
Dispositif de changement de vitesse pour une transmission automatique d'un véhicule automobile

(30) Priorität: 22.05.1996 DE 19620515
(43) Veröffentlichungstag der Anmeldung: 26.11.1997
(73) Patentinhaber: ZF Lemförder Metallwaren AG, 49448 Lemförde (DE)
(72) Erfinder: Meyer, Jörg, 49419 Wagenfeld (DE)

(56) Entgegenhaltungen:
- EP-A- 0 413 115
- EP-A- 0 624 741
- DE-A- 3 717 675
- DE-C- 4 426 207

## Beschreibung

Die Erfindung betrifft eine Schaltvorrichtung für ein Automatikgetriebe eines Kraftfahrzeuges nach dem Oberbegriff des Patentanspruches 1.

An Schaltvorrichtungen für Automatikgetriebe werden ständig wachsende Anforderungen bezüglich des Bedienkomforts gestellt. Aus diesem Grunde geht man verstärkt dazu über, neben den herkömmlichen Automatikschaltfunktionen auch manuelle Schaltfunktionen zusätzlich vorzusehen. Hierfür ist in der Schaltvorrichtung eine zweite, separate Schaltgasse erforderlich. Die Anwahl dieser Schaltgasse ermöglicht es dem Fahrzeugführer, in einfacher Weise das Getriebe schrittweise zu schalten. Um vom herkömmlichen Automatikschaltbetrieb in die Schrittschaltgasse zu wechseln, ist es erforderlich, den Wählhebel über eine Wählachse schwenkbar zu lagern. Ferner ist es notwendig, den Wählhebel in der Schrittschaltgasse zu fixieren.
Aus gattungsbildender DE-C-44 26 207 ist eine Wähleinrichtung für ein Automatikgetriebe eines Kraftfahrzeuges bekannt, bei der der Wählhebel zwischen zwei verschiedenen Schaltgassen hin und her geschwenkt werden kann. Die erste Schaltgasse ermöglicht dabei den Automatikbetrieb, die zweite Schaltgasse eine manuelle Schrittschaltung. Um diese Schaltung möglichst kompakt gestalten zu können, wurden die Wählachse und die Schaltachse des Wählhebels in eine gemeinsame Ebene gelegt. Ferner stehen beide Achsen orthogonal zueinander. Der Wählhebel wird zum Wechsel von Automatikbetrieb auf manuellen Betrieb in die Schrittschaltgasse geschwenkt. Er greift dabei in komplementär gestaltete Führungselemente ein, die die Signale der manuellen Schaltbetätigung aufnehmen und weiterleiten. Diese Schaltung ist sowohl konstruktiv als auch fertigungstechnisch infolge einer großen Vielzahl von Bauteilen kompliziert und somit kostenintensiv.

Aus DE 195 26 059 geht darüber hinaus eine Schaltvorrichtung für ein automatisches Getriebe eines Kraftfahrzeuges hervor, bei der ein Wählhebel innerhalb einer Schaltkulisse um eine tiefer als diese liegende Wählachse schwenkbar ist und in den Schaltstellungen P, R, N und D durch quer zur Längsrichtung der Schaltkulisse wirksame Federkräfte gegen seitlich zueinander versetzt liegende Rastungen, die den Schaltstellungen zugeordnet sind, gehalten ist. Die Wählachse des Wählhebels ist universalgelenkig in einem Zwischenteil gelagert, wobei dieses Zwischenteil an einem karosseriefesten Gehäuse um die Wählachse schwenkbar gelagert ist und der Wählhebel in der ausgewählten, dem automatischen Schalten zugeordneten Schaltstellung (D) um ein höher als die Wählachse liegendes Schwenklager in Richtung der Wählbewegung zur Überbrückung von Schaltkontakten für die schrittweise Schaltung der Gänge des Getriebes manuell relativ zum Zwischenteil schwenkbar ist.

Der Erfindung liegt das technische Problem zugrunde, eine Schaltvorrichtung für ein Automatikgetriebe eines Kraftfahrzeuges zu schaffen, die einfach und kostengünstig herstellbar ist und die neben einer ersten Automatikschaltgasse eine zweite Schrittschaltgasse für einen manuellen, schrittweisen Schaltbetrieb aufweist, wobei sich der Wählhebel in der Schrittschaltgasse in einer separaten Lagerstelle in dem Gehäuse abstützen soll.

Die Erfindung löst diese technische Problemstellung mit den kennzeichnenden Merkmalen des Patentanspruches 1. Ausgestaltungen der Erfindung sind Gegenstand der Unteransprüche.

Eine erfindungsgemäße Schaltvorrichtung für ein Automatikgetriebe eines Kraftfahrzeuges weist einen Wählhebel auf, an dessen oberer, dem Fahrzeugführer zugewandten Seite, sich ein Schaltknauf befindet.
Der Wählhebel ist um eine Wählachse schwenkbar in einem karosseriefesten Gehäuse gelagert, wodurch der Wechsel zwischen Automatik- und Schrittschaltgasse möglich ist. Er ist darüber hinaus auch zusammen mit einem Wählhebelträger um die Schaltachse schwenkbar.

Innerhalb der Schrittschaltgasse ist der Wählhebel zusätzlich zusammen mit dem Wählhebelträger geringfügig gegen die Wirkung wenigstens einer Feder axial in Richtung der Wählachse verschiebbar.
Der Wählhebelträger weist entsprechend der vorgeschlagenen Lösung einen Arrettierungszapfen auf, der in eine komplementäre Gehäuseausnehmung einrückt, wenn der Wählhebel in die Automatikschaltgasse verschwenkt wird. Der Wählhebel wird in dieser Gasse in an sich bekannter Weise um die Schaltachse verschwenkt, sodaß die einzelnen Fahrstufen vom Fahrzeugführer angewählt werden können. Innerhalb des zumeist hohl ausgebildeten Wählhebels kann je nach Schaltungsart eine Zugstange axial beweglich geführt sein. Wenn eine solche Zugstange Verwendung finden soll, ist es von Vorteil, diese unter der Wirkung einer Feder innerhalb einer in den Wählhebelträger oder in das Gehäuse eingearbeiteten Kontur, die den einzelnen Automatikfahrstufen entspricht, gleiten zu lassen. In der Schrittschaltgasse ist es dem Fahrzeugführer bekanntermaßen möglich, durch tippweises bewegen des Schalthebels in der einen oder anderen Richtung das Getriebe nach Belieben manuell zu schalten. Die Abnahme und Übertragung der Schaltsignale kann dabei auf unterschiedlichste Art und Weise geschehen. Dies ist jedoch nicht Gegenstand der vorliegenden Lösung.
Um einen Wechsel von der Automatikschaltgasse in die Schrittschaltgasse vorzunehmen, wird der Wählhebel seitwärts um die, im karosseriefesten Gehäuse gelagerte Wählachse verschwenkt. Dabei wird die Verbindung zwischen dem Arretierungszapfen des Wählhebelträgers und der Gehäuseausnehmung außer Eingriff gebracht. Der Wählhebel wird innnerhalb der Schrittschaltgasse ebenfalls um die Schaltachse verschwenkt. Er stützt sich dabei über einen Zapfen in dem Geäuse ab. Dieser Zapfen kann sowohl der Anbindung an ein Übertragungselement dienen, welches seinerseits die Verbindung zwischen Schaltvorrichtung und Kraftfahrzeuggetriebe darstellt, als auch zur Lagerung und Abstützung des Wählhebels in dem Gehäuse.
Es ist erfindungsgemäß jedoch ebenso möglich, einen zweiten, versetzt angeordneten Zapfen ausschließlich zur Anbindung des Übertragungselementes vorzusehen, welcher aus geometrischen Gründen möglichst eine geringe Entfernung zu dem ersten Zapfen aufweisen sollte.
Vorteilhaft ist es jedoch, lediglich einen Zapfen für beide Funktionen, also die Abstützung beziehungsweise Lagerung des Wählhebels, sowie die Anbindung des Übertragungselementes, zu verwenden.
Es können zylindrische Zapfen, Kugelzapfen oder andere Zapfenformen Anwendung finden. Kugelzapfen sind vorteilhaft, wenn der Schwenkwinkel des Wählhebels groß ist. Zur Lagerung und Abstützung des Wählhebels in dem Gehäuse greift der Zapfen mit seinem Zapfenende in eine komplementäre Lagerstelle des Gehäuses ein. Diese Lagerstelle sollte mit einem begrenzt elastischen Kunststoff ausgekleidet sein.

Erfindungsgemäß ist ein erstes Rastmittel vorgesehen, das beim Umlegen des Wählhebels mittels einer Federkraft auf diesen Wählhebel wirkt, sodaß nach Überwindung eines "oberen Totpunktes" der Wählhebel durch das Rastmittel in seiner Position in einer der beiden Schaltgassen gehalten wird.
In der Schrittschaltgasse können die Getriebeschaltvorgänge durch den Fahrzeugführer manuell vorgegeben werden. Erfindungsgemäß wird hierfür der Wählhebel um wenige Winkelgrade verschwenkt. Die Schrittschaltung erfolgt also durch einen kurzzeitigen Druck des Wählhebels in der entsprechenden Richtung. Zur Simulierung des Schaltvorganges in der Schrittschaltgasse ist in dem Gehäuse ein zweites Rastmittel vorgesehen. Dieses Rastmittel erzeugt eine, der Bewegungsrichtung des Wählhebels entgegengesetze, Federkraft. Es erzeugt gewissermaßen nur einen Druckpunkt und drückt den Wählhebel zusätzlich in seine Ausgangsstellung innerhalb der Schrittschaltgasse zurück, soll aber keine echte Rastung darstellen, wie es bei dem ersten Rastmittel der Fall ist. Beide Rastmittel können baugleich sein.

Eine derartige Schaltvorrichtung ist sehr einfach im Aufbau und damit kostengünstig herstellbar. Durch die wenigen, einfachen Bauteile ergibt sich gegenüber bekannten Ausführungen eine wesentliche Gewichtsersparnis und schnellere Montagemöglichkeit.

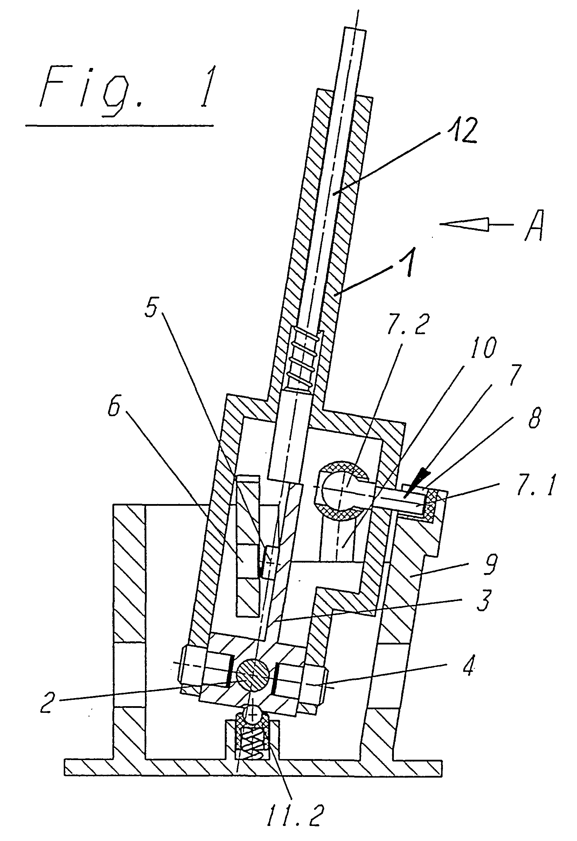

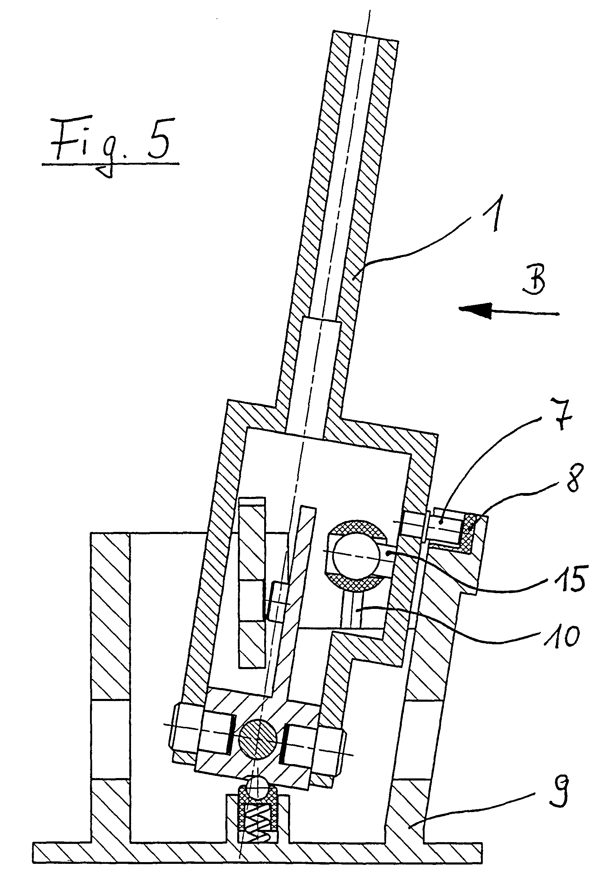

Bevorzugte Ausführungsbeispiele der Erfindung werden nachstehend unter Bezugnahme auf die Zeichnungen näher erläutert. Es zeigen:
**Figur 1:**
   die Darstellung einer erfindungsgemäßen Schaltvorrichtung mit oberer Seilzuganbindung im Schnitt
**Figur 2:**
   die Darstellung einer erfindungsgemäßen Schaltvorrichtung mit oberer Seilzuganbindung im Schnitt in der Ansicht entsprechend der Pfeilrichtung A nach Figur 1
**Figur 3:**
   die Darstellung einer erfindungsgemäßen Schaltvorrichtung mit unterer Seilzuganbindung im Schnitt
**Figur 4:**
   die Darstellung einer erfindungsgemäßen Schaltvorrichtung mit oberer Seilzuganbindung im Schnitt
**Figur 5:**
   die Darstellung einer erfindungsgemäßen Schaltvorrichtung mit einer versetzten Seilzuganbindung im Schnitt.
**Figur 6:**
   die Darstellung einer erfindungsgemäßen Schaltvorrichtung mit einer versetzten Seilzuganbindung im Schnitt in der Ansicht entsprechend der Pfeilrichtung B nach Figur 5.

In Figur 1 ist eine erfindungsgemäße Schaltvorrichtung für ein Automatikgetriebe eines Kraftfahrzeuges dargestellt. Diese weist einen Wählhebel (1) auf, an dessen oberer, dem Fahrzeugführer zugewandten Seite, sich ein Schaltknauf befindet. Dieser ist in Figur 1 zur Vereinfachung ebenso wie die Schaltkulisse, innerhalb der der Wählhebel geführt wird, nicht dargestellt.
Der Wählhebel (1) ist um eine Wählachse (2) schwenkbar in einem karosseriefesten Gehäuse (9) gelagert. Er ist in der Schrittschaltgasse darüber hinaus zusammen mit einem Wählhebelträger (3) um die Schaltachse (4) schwenkbar. Der Wählhebelträger weist entsprechend der vorgeschlagenen Lösung einen Arrettierungszapfen (5) auf, der in eine komplementäre Gehäuseausnehmung (6) einrückbar ist.
Der Arretierungszapfen (5) steht mit der Gehäuseausnehmung (6) in Eingriff, wenn sich der Wählhebel (1) in der Automatikschaltgasse befindet, sodaß der Wählhebelträger (3) an dem Gehäuse (9) festgelegt ist. Der Wählhebel wird dann in an sich bekannter Weise um die Schaltachse (4) verschwenkt. Die Anwahl der einzelnen Automatik-Fahrstufen ist somit möglich. Innerhalb des hohl ausgebildeten Wählhebels ist eine Zugstange (12) axial beweglich geführt. Diese stützt sich in dem Wählhebel unter Federkraft ab und ist innerhalb einer in das Gehäuse (9) eingearbeiteten Kontur, die den einzelnen Automatik-Fahrstufen entspricht, gleitend geführt.
Der Wählhebelträger (3) ist mit einem Radius versehen. Auf dieser Oberfläche gleitet die Zugstange (12) bereichsweise.
Um einen Wechsel von der Automatikschaltgasse in die Schrittschaltgasse vorzunehmen, wird der Wählhebel (1) seitwärts um die, im karosseriefesten Gehäuse (9) gelagerte Wählachse (2) verschwenkt. Dabei wird die Verbindung zwischen dem Arrettierungszapfen (5) des Wählhebelträgers (3) und der Gehäuseausnehmung (6) außer Eingriff gebracht. Der Wählhebel wird innnerhalb der Schrittschaltgasse ebenfalls um die Schaltachse (4) verschwenkt. Er stützt sich dabei bei der gezeigten Ausführung über einen Kugelzapfen (7) in dem Geäuse ab. Dieser Kugelzapfen dient dabei sowohl der Anbindung an ein Übertragungselement (10), welches seinerseits die Verbindung zwischen Schaltvorrichtung und Kraftfahrzeuggetriebe darstellt und in der dargestellten Ausführung ein Seilzug ist, als auch zur Lagerung und Abstützung des Wählhebels in dem Gehäuse (9). Die Anbindung des Kugelzapfens (7) an das Übertragungselement (10) erfolgt über eine an diesem Übertragungselement (10) befestigte Lagerschale, die vorzugsweise aus Kunststoff besteht und die Kugel (7.2) des Kugelzapfens (7) aufnimmt. Zur Lagerung und Abstützung des Wählhebels in dem Gehäuse durchdringt der Kugelzapfen (7) mit seinem Zapfenende (7.1) den Wählhebel (1) und greift in eine komplementäre Lagerstelle (8) des Gehäuses (9) ein. Diese Lagerstelle ist mit einem begrenzt elastischen Kunststoff ausgekleidet.

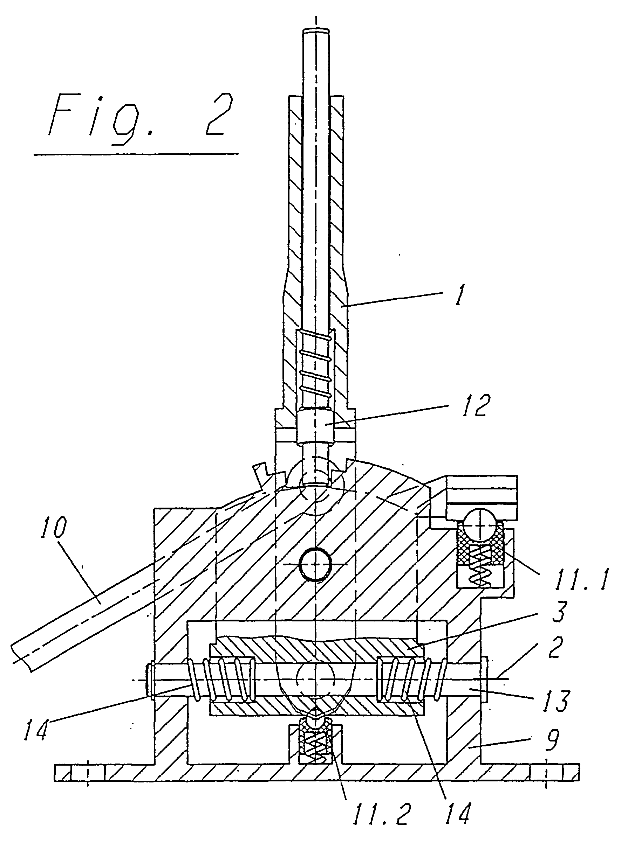

Wie aus Figur 2 ersichtlich, ist erfindungsgemäß ein erstes Rastmittel (11.1) vorgesehen, das beim Verschwenken des Wählhebels (1) unter Federkraft auf diesen Wählhebel wirkt, sodaß nach Überwindung eines "oberen Totpunktes" der Wählhebel durch das Rastmittel in seiner Position in einer der beiden Schaltgassen gehalten wird.
Zur Simulierung des Schaltvorganges in der Schrittschaltgasse ist in dem Gehäuse (9) ein zweites Rastmittel (11.2) vorgesehen. Dieses Rastmittel erzeugt eine, der Bewegungsrichtung des Wählhebels entgegengesetze, Federkraft. Es erzeugt gewissermaßen nur einen Druckpunkt und drückt den Wählhebel zusätzlich in seine Ausgangsstellung innerhalb der Schrittschaltgasse zurück, soll aber keine echte Rastung darstellen, wie es bei dem ersten Rastmittel der Fall ist. Beide Rastmittel sind baugleich.
Die Wählachse (2) wird gemäß der in Figur 2 dargestellten Ausführungsform einer erfindungsgemäßen Schaltvorrichtung durch einen einfachen, in dem Gehäuse (9) gelagerten Bolzen (13) gebildet. Der Wählhebelträger (3) stützt sich über den Bolzen (13) und Spiralfedern (14) in dem Gehäuse (9) ab und positioniert somit zugleich den Wählhebel. Die Zugstange (12) gleitet in der Kontur des Gehäuses (9), sowie bereichsweise auch auf dem Wählhebelträger (3).

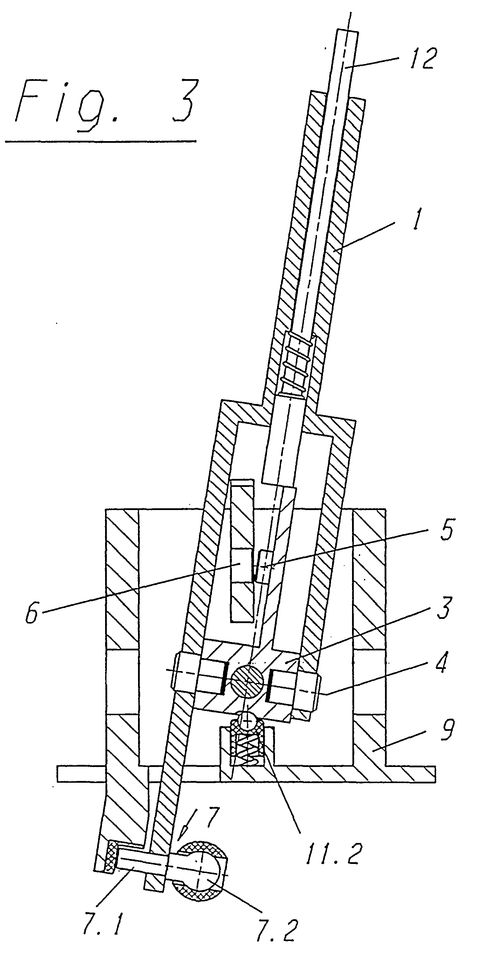

In der Figur 3 ist eine erfindungsgemäße Schaltvorrichtung dargestellt, bei der die Anbindung des Übertragungselementes im unteren Bereich des Wählhebels erfolgt. Diese Bauform ist etwas schlanker, als die in den Figuren 1 bis 2 beschriebenen Ausführungen, erfordert jedoch in der Höhe mehr Bauraum.

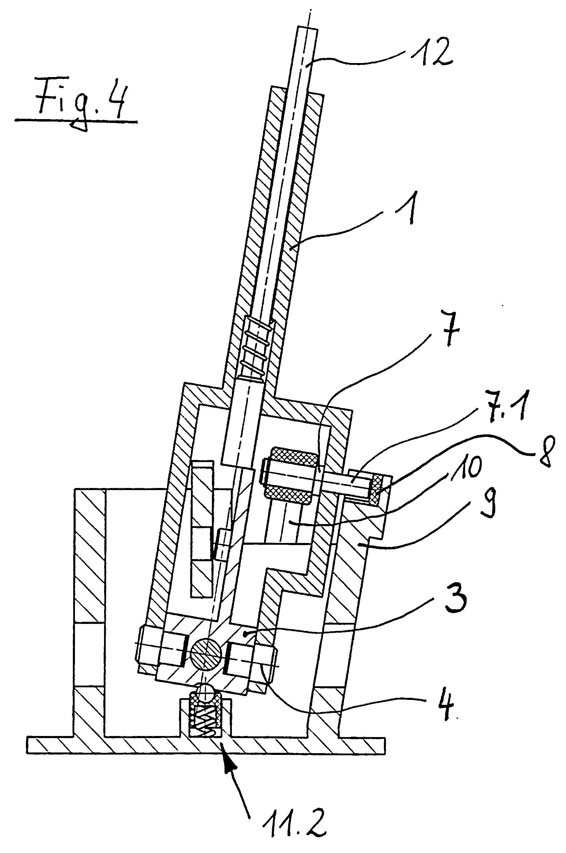

Die Figur 4 zeigt eine Darstellung einer erfindungsgemäßen Schaltvorrichtung mit oberer Seilzuganbindung im Schnitt, wie sie ähnlich bereits der Figur 1 entnehmbar ist. Im Unterschied zu der Ausführungsform nach Figur 1 wird hier jedoch ein zylindrischer Zapfen (7) verwendet, der sowohl zur Anbindung des Übertragungselementes, als auch zur Lagerung und Abstützung des Wählhebels in dem Gehäuse (9) dient. Die Anbindung des Zapfens (7) an das Übertragungselement (10) erfolgt über eine an diesem Übertragungselement (10) befestigte Lagerschale, die aus elastischem, spielausgleichenden Kunststoff besteht und einen zylindrischen Bereich des Kugelzapfens (7) aufnimmt.

In Figur 5 ist eine erfindungsgemäße Schaltvorrichtung mit einer versetzten Seilzuganbindung im Schnitt dargestellt.
Dabei dient der zylindrische Zapfen (7) wie zuvor zur Lagerung und Abstützung des Wählhebels (1) in dem Gehäuse (9). Die Anbindung des Übertragungselementes (10) erfolgt über einen an dem Wählhebel (1) angeformten oder daran befestigten zweiten Zapfen (15). Dieser ist bei der dargestellten Lösung als Kugelzapfen ausgeführt. Die am Übertragungselement (10) befestigte Lagerschale nimmt die Kugel dieses Kugelzapfens (15) auf.

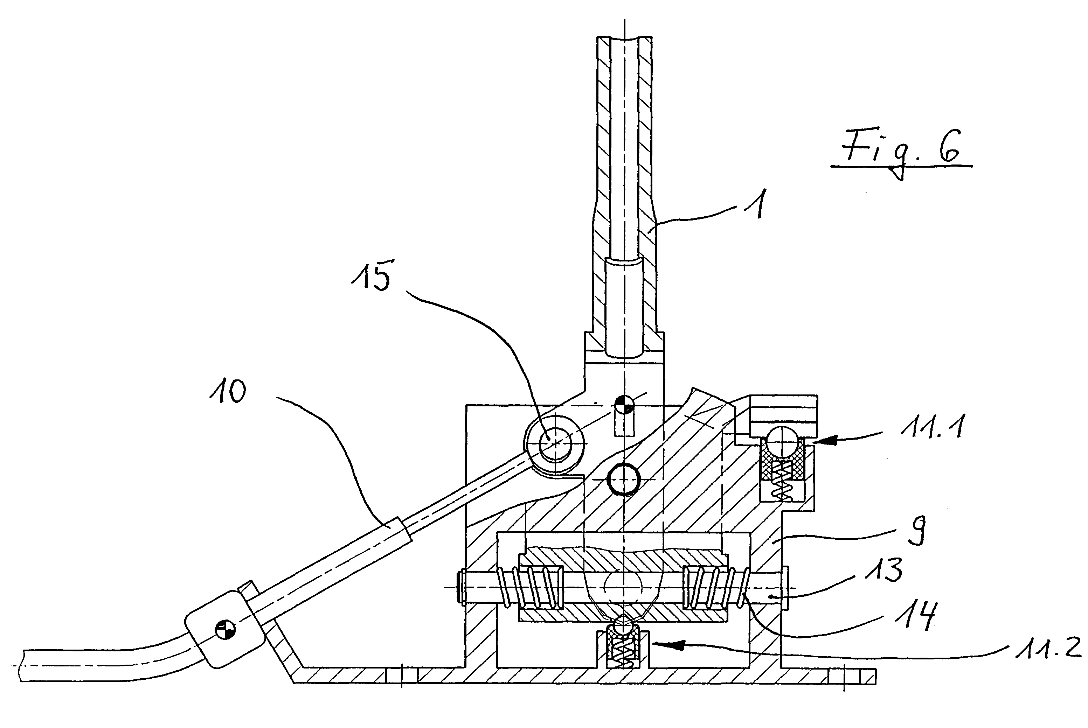

Figur 6 zeigt die bereits zu Figur 5 beschriebene Ausführung einer erfindungsgemäßen Schaltvorrichtung mit versetzter Seilzuganbindung im Schnitt, in der Ansicht entsprechend der Pfeilrichtung B nach Figur 5.

### Bezugszeichenliste:

- 1: Wählhebel
- 2: Wählachse
- 3: Wählhebelträger
- 4: Schaltachse
- 5: Arrettierungszapfen
- 6: Gehäuseausnehmung
- 7: Zapfen
- 7.1: Zapfenende
- 7.2: Kugel
- 8: Lagerstelle
- 9: Gehäuse
- 10: Übertragungselement
- 11.1: Rastmittel
- 11.2: Rastmittel
- 12: Zugstange
- 13: Bolzen
- 14: Spiralfeder
- 15: Zapfen

## Patentansprüche

1. Schaltvorrichtung für ein Automatikgetriebe eines Kraftfahrzeuges mit
- einer ersten Automatikschaltgasse,
- einer zweiten Schaltgasse für einen manuellen, schrittweisen Schaltbetrieb (Schrittschaltgasse),
- einem innerhalb einer Schaltkulisse um eine unterhalb dieser liegende Wählachse (2) schwenkbar gelagerten Wählhebel (1), wobei die Wählachse (2) in einem die Schaltvorrichtung aufnehmenden, karosseriefesten Gehäuse (9) gelagert ist,
- einer Schaltachse (4), die orthogonal zu der Wählachse (2) und mit dieser in einer Ebene liegt
**dadurch gekennzeichnet, daß**
- in der Schrittschaltgasse ein Zapfen (7) an dem Wählhebel (1) mit seinem Ende in eine oberhalb oder unterhalb der Schaltachse (4) gelegene Lagerstelle (8) in dem Gehäuse (9) eingreift,
- ein mit dem Wählhebel (1) um die Wählachse (2) schwenkbar gelagerter und in dem Gehäuse (9) in der Wählachse (2) beiderseits durch Federn (14) abgestützter Wählhebelträger (3) den Wählhebel (1) um die Schaltachse (4) schwenkbar aufnimmt und beim Verschwenken in die Automatikschaltgasse mit einem Arretierungszafen (5) in eine komplementäre Gehäuseausnehmung (6) einrückbar ist.

2. Schaltvorrichtung für ein Automatikgetriebe eines Kraftfahrzeuges nach Anspruch 1,
**dadurch gekennzeichnet, daß**
das Übertragungselement (10) an einem zweiten, zu dem Zapfen (7) versetzt an dem Wählhebel (1) angeordneten Zapfen (15) befestigt ist.

3. Schaltvorrichtung für ein Automatikgetriebe eines Kraftfahrzeuges nach Anspruch 1,
**dadurch gekennzeichnet, daß**
der Zapfen (7) ein Kugelzapfen ist und dieser in der Schrittschaltgasse mit seinem Zapfenende (7.1) den Wählhebel (1) oberhalb der Schaltachse (4) durchgreift und in die in dem Gehäuse (9) gelegene Lagerstelle (8) eingreift, wobei an der Kugel (7.2) des Kugelzapfens (7) das Übertragungselement (10) angebracht ist.

4. Schaltvorrichtung für ein Automatikgetriebe eines Kraftfahrzeuges nach Anspruch 1,
**dadurch gekennzeichnet, daß**
der Zapfen (7) ein Kugelzapfen ist und dieser in der Schrittschaltgasse mit seinem Zapfenende (7.1) den Wählhebel (1) unterhalb der Schaltachse (4) durchgreift und in die in dem Gehäuse (9) gelegene Lagerstelle (8) eingreift, wobei an der Kugel (7.2) des Kugelzapfens (7) das Übertragungselement (10) angebracht ist.

5. Schaltvorrichtung für ein Automatikgetriebe eines Kraftfahrzeuges nach einem der vorhergehenden Ansprüche,
**dadurch gekennzeichnet, daß**
die Lagerstelle (8) des Gehäuses (9) mit einem begrenzt elastischen Kunststoff ausgekleidet ist.

6. Schaltvorrichtung für ein Automatikgetriebe eines Kraftfahrzeuges nach einem oder mehreren der vorherigen Ansprüche,
**dadurch gekennzeichnet, daß**
Rastmittel (11.1) zur Festlegung des Wählhebels (1) in den jeweiligen Schaltgassen und darüber hinaus Rastmittel (11.2) zur Erzeugung eines Druckpunktes für den schrittweisen Schaltvorgang in der Schrittschaltgasse Verwendung finden.

## Claims

1. Gear shifting device for an automatic transmission of a motor vehicle with
- a first automatic shift path,
- a second shift path for a manual, stepwise shift operation (stepped shift path),
- a selector lever (1), which is mounted so as to be pivotable inside a gear shifting gate about a selector shaft (2) lying below the latter, wherein the selector shaft (2) is mounted in a casing (9) which holds the gear shifting device and is rigid with the body,
- a gearshift lever shaft (4), which lies orthogonally to the selector shaft (2) and in one plane with the latter,
**characterised in that**
in the stepped shift path a pin (7) at the selector lever (1) engages by way of its end in a bearing point (8), located above or below the gearshift lever shaft (4), in the casing (9),
a selector lever carrier (3), which is mounted so as to be pivotable with the selector lever (1) about the selector shaft (2) and supported in the casing (9) in the selector shaft (2) on both sides by springs (14), holds the selector lever (1) so as to be pivotable about the gearshift lever shaft (4) and can be engaged by way of a retaining pin (5) in a complementary casing recess (6) upon pivoting into the automatic shift path.

2. Gear shifting device for an automatic transmission of a motor vehicle according to Claim 1,
**characterised in that**
the transmission element (10) is secured to a second pin (15), which is disposed so as to be staggered with respect to the pin (7) at the selector lever (1).

3. Gear shifting device for an automatic transmission of a motor vehicle according to Claim 1,
**characterised in that**
the pin (7) is a ball end pin and this passes in the stepped shift path by way of its pin end (7.1) through the selector lever (1) above the gearshift lever shaft (4) and engages in the bearing point (8) located in the casing (9), wherein the transmission element (10) is mounted on the ball (7.2) of the ball end pin (7).

4. Gear shifting device for an automatic transmission of a motor vehicle according to Claim 1,
**characterised in that**
the pin (7) is a ball end pin and this passes in the stepped shift path by way of its pin end (7.1) through the selector lever (1) below the gearshift lever shaft (4) and engages in the bearing point (8) located in the casing (9), wherein the transmission element (10) is mounted on the ball (7.2) of the ball end pin (7).

5. Gear shifting device for an automatic transmission of a motor vehicle according to any one of the preceding Claims,
**characterised in that**
the bearing point (8) of the casing (9) is lined with a plastic material of limited elasticity.

6. Gear shifting device for an automatic transmission of a motor vehicle according to one or more of the preceding Claims,
**characterised in that**
locking means (11.1) for fixing the selector lever (1) in the respective shift paths and, in addition, locking means (11.2) for producing a pressure point for the stepwise shift operation in the stepped shift path are used.

## Revendications

1. Dispositif de changement de vitesse pour une transmission automatique d'un véhicule automobile, comprenant :
- une première voie de changement de vitesse automatique,
- une deuxième voie de changement de vitesse pour un mode de changement de vitesse manuel, pas à pas (voie de changement de vitesse pas à pas),
- un levier de sélection (1) logé à l'intérieur d'une coulisse de changement de vitesse pivotant autour d'un axe de sélection (2) situé au-dessous de celle-ci, l'axe de sélection (2) étant logé dans un boîtier (9) qui est fixé à la carrosserie, et qui contient le dispositif de changement de vitesse, et
- un axe de changement de vitesse (4) placé orthogonalement par rapport à l'axe de sélection (2) et disposé avec celui-ci dans un plan, **caractérisé en ce que**
- dans la voie de changement de vitesse pas à pas, un pivot (7) du levier de sélection (1) vient en prise dans le boîtier (9) une extrémité du pivot reposant sur une zone d'appui (8) située au-dessus ou au-dessous de l'axe de changement de vitesse (4), et
- un levier de sélection (3), logé avec le levier de sélection (1) pivotant autour de l'axe de sélection (2) et supporté des deux côtés dans le boîtier (9) suivant l'axe de sélection (2) par des ressorts (14), admet le pivotement du levier de sélection (1) autour de l'axe de changement de vitesse (4) et est positionnable dans un évidement du boîtier complémentaire (6) avec un pivot d'arrêt (5) en cas de basculement dans la voie de changement de vitesse automatique.

2. Dispositif de changement de vitesse pour une transmission automatique d'un véhicule automobile selon la revendication 1, **caractérisé en ce que** l'organe de transmission (10) est fixé sur un deuxième pivot (15) disposé sur le levier de sélection (1) décalé par rapport au pivot (7).

3. Dispositif de changement de vitesse pour une transmission automatique d'un véhicule automobile selon la revendication 1, **caractérisé en ce que** le pivot (7) est un pivot sphérique et celui-ci traverse, dans la voie de changement de vitesse pas à pas, avec son extrémité de pivot (7.1), le levier de sélection (1) au-dessus de l'axe de changement de vitesse (4) et vient en prise avec la zone d'appui (8) placée dans le boîtier (9), l'organe de transmission (10) étant disposé sur la sphère (7.2) du pivot sphérique (7).

4. Dispositif de changement de vitesse pour une transmission automatique d'un véhicule automobile selon la revendication 1, **caractérisé en ce que** le pivot (7) est un pivot sphérique et celui-ci traverse, dans la voie de changement de vitesse pas à pas, avec son extrémité de pivot (7.1), le levier de sélection (1) au-dessous de l'axe de changement de vitesse (4) et vient en prise avec la zone d'appui (8) placée dans le boîtier (9), l'organe de transmission (10) étant disposé sur la sphère (7.2) du pivot sphérique (7).

5. Dispositif de changement de vitesse pour une transmission automatique d'un véhicule automobile selon l'une des revendications précédentes, **caractérisé en ce que** la zone d'appui (8) du boîtier (9) est revêtue d'une matière plastique d'une élasticité limitée.

6. Dispositif de changement de vitesse pour une transmission automatique d'un véhicule automobile selon l'une ou plusieurs des revendications précédentes, **caractérisé en ce que** des agents d'encliquetage (11.1) destinés à fixer le levier de sélection (1) dans les voies de changement de vitesse respectives et, en outre, des agents d'encliquetage (11.2) destinés à générer un point de poussée lors du changement de vitesse pas à pas, trouvent leur utilisation dans la voie de changement de vitesse pas à pas.
